# EUROPÄISCHE PATENTSCHRIFT

(11) **EP 1 332 072 B1**
(45) Veröffentlichungstag und Bekanntmachung des Hinweises auf die Patenterteilung: **19.01.2005**
(21) Anmeldenummer: 01993382.9
(22) Anmeldetag: 03.11.2001
(51) Int. Cl.: B60R 25/04, B60R 25/02

(54) **VORRICHTUNG MIT EINER LENKUNGSVERRIEGELUNG SOWIE MIT EINEM ZÜNDANLASSSCHALTER, DIE BEI ANWESENHEIT EINES IDENTIFIKATIONSGEBERS VON EINER HANDHABE STEUERBAR SIND**
DEVICE COMPRISING A STEERING LOCK AND AN IGNITION STARTER SWITCH WHICH CAN BE CONTROLLED BY A HANDLE IN THE PRESENCE OF AN IDENTIFICATION TRANSMITTER
DISPOSITIF COMPORTANT UN ORGANE DE VERROUILLAGE DE DIRECTION ET UN CONTACTEUR DE DEMARRAGE POUVANT ETRE COMMANDES PAR UNE MANETTE EN PRESENCE D'UN GENERATEUR D'IDENTIFICATION

(30) Priorität: 08.11.2000 DE 10055361
(43) Veröffentlichungstag der Anmeldung: 06.08.2003
(73) Patentinhaber: Huf Hülsbeck & Fürst GmbH & Co. KG, 42551 Velbert (DE)
(72) Erfinder: USELLI, Gianni, 42555 Velbert (DE)
(74) Vertreter: Mentzel, Norbert, Dipl.-Phys.
(86) Internationale Anmeldenummer: PCT/EP2001/012765
(87) Internationale Veröffentlichungsnummer: WO 2002/038424

(56) Entgegenhaltungen:
- EP-A- 0 742 127
- DE-A- 3 344 411
- DE-A- 3 724 705
- DE-A- 19 838 992

## Beschreibung

Die Erfindung richtet sich auf eine Vorrichtung der im Oberbegriff des Anspruches 1 angegebenen und aus der DE 19838992 bekannten Art. Die Steuerung der Lenkung des Schalters ist mittels Drehung einer unlösbaren Handhabe zwar möglich, aber nur dann ausführbar, wenn von einem im Fahrzeug angeordneten Identifikationsnehmer (ID-Nehmer) die Anwesenheit eines Identifikationsgebers (ID-Geber) festgestellt wird. Diese Feststellung erfolgt durch Starten einer Identifikationsabfrage (ID-Abfrage). Andernfalls, bei fehlendem ID-Geber, ist eine manuelle Drehung der Handhabe blockiert. Diese Steuerung nennt man "passive go" oder "keyless go". Der ID-Geber besteht z.B. aus einer Karte, welche vom berechtigten Fahrzeugbenutzer bei sich geführt wird. Ein solcher ID-Geber könnte auch in einem elektronischen Schlüssel oder in einem Handy integriert sein.

Für die Blockierung bzw. Freigabe der Handhabe sorgen damit verbundene Steuermittel, zu welchen eine Steuerkurve gehört. Die Steuermittel werden nach einer Betätigung der Handhabe von einer Rückstellfeder in eine definierte axiale Ausgangsposition zurückgeführt. Die Steuerkurve sorgt für eine axial und rotativ abgestimmte Bewegung der Steuermittel.

Die bekannte Vorrichtung dieser Art (DE 198 38 992 A1) erfordert einen hohen technischen Aufwand. Man kann nicht auf konventionelle Lenkungsverriegelungen und Zündschalter zurückgreifen. Die Lenkungsverriegelung erfolgt auf elektronischem Wege. Mit der Handhabe müssen nicht nur Drehbewegungen, sondern auch damit abgestimmte Axialbewegungen ausgeführt werden, um die elektronische Lenkungsverriegelung in Verriegelungs- bzw. Entriegelungsstellung zu überführen. Das ist umständlich.

Der Erfindung liegt die Aufgabe zugrunde, eine einfache und doch zuverlässige Vorrichtung der im Oberbegriff des Anspruches 1 genannten Art zu entwickeln, bei welcher auch konventionelle Lenkungsverriegelungen und Zündanlassschalter verwendet werden können. Dies wird erfindungsgemäß durch die im Anspruch 1 genannten Maßnahmen erreicht, denen folgende besondere Bedeutung zukommt.

Weil die Steuermittel bei der Erfindung aus einem Rotor mit wenigstens bereichsweise magnetisierbarem Material bestehen, lässt sich dieser einerseits von einem Elektromagneten axial steuern und andererseits von einem Permanentmagneten in einer axialen Endposition festhalten. In der axialen Ausgangsposition ist der Rotor blockiert, weshalb Drehungen der Handhabe wirkungslos sind. Dann befindet sich der Rotor auch in einem ausreichend großen Axialabstand, damit die Wirkungen des Permanentmagneten sich zunächst nicht am Rotor bemerkbar machen. Aufgrund einer erfolgreichen ID-Abfrage erfolgt eine Bestromung des Elektromagneten, wodurch dieser den Rotor, gegen die Kraft der auf ihn wirkenden Rückstellfeder in eine axiale Zwischenposition verschoben wird. Dann ist die Blockade aufgehoben, weshalb die Drehung der Handhabe möglich ist. Bei der Drehung wird ein geneigtes Zwischenstück der Steuerkurve gegenüber dem Rotor wirksam. Durch die Drehung der Handhabe gelangt deshalb der Rotor in eine axiale Endposition, in welcher ihn der Permanentmagnet den Rotor festhält, und zwar auch dann, wenn die Bestromung des Elektromagneten beendet ist. Dann kann der Rotor weitergedreht werden, wodurch eine Entriegelungsstellung der Lenkung erreicht wird und, entsprechend dem Ausmaß der Drehung, nacheinander die verschiedenen Arbeitslagen des Schalters angesteuert werden. Diese axiale Endposition bleibt aber auch bei einer Rückdrehung des Rotors erhalten. Bei dieser Rückdrehung löst sich der Rotor von der Steuerkurve und kann bis zur Ruhelage des Schalters zurückbewegt werden, doch bleibt dann die Lenkung zunächst noch in ihrer Entriegelungsstellung. Dies ändert sich erst wenn eine ausreichend große axiale Gegenkraft auf den Rotor ausgeübt wird, welche die Festhaltekraft des Permanentmagneten überwindet und ihn in seine axiale Ausgangsposition zurückbewegt. Dann wird die Lenkung in ihre Verriegelungsstellung überführt und der Rotor kommt wieder in Kontakt mit der Steuerkurve, welche dann die Blockade der Handhabe gegenüber Drehungen bewirkt. Dieses Wechselspiel von Elektromagneten und Permanentmagneten lässt sich zuverlässig ausführen. Man kann bei der Erfindung konventionelle Lenkungsverriegelungen und Zündanlassschalter verwenden, welche durch mechanische Drehungen bzw. axiale Bewegungen des Rotorausgangs gesteuert werden können.

Weitere Maßnahmen und Vorteile der Erfindung ergeben sich aus den Unteransprüchen, der nachfolgenden Beschreibung und den Zeichnungen. In den Zeichnungen ist die Erfindung schematisch in einem Ausführungsbeispiel dargestellt, und zwar in den jeweils mit "a" gekennzeichneten Figuren alle maßgeblichen Bauteile, aber in verschiedenen Betriebsstellungen im Axialschnitt dargestellt, während die mit "b" gekennzeichneten Figuren jeweils ein Teilstück davon in Draufsicht und bei axial geschnittenem Gehäuse zeigen. Es zeigen:
- Fig. 1a, 1b: den Ruhefall der erfindungsgemäßen Vorrichtung, wo die Lenkung in Verriegelungsstellung und der Schalter in seiner Ruhelage sich befinden, wobei eine Drehung der Handhabe blockiert ist,
- Fig. 2a, 2b: zeigt eine erste Phase des Betriebsfalls, wo die Lenkung und der Schalter sich in den gleichen Stellungen und Lagen wie in Fig. 1a und 1b befinden, aber eine Drehung der Handhabe schon möglich ist,
- Fig. 3a, 3b: eine zweite Betriebsphase, die sich aus einer Drehung der Handhabe ergibt, die zu einer Entriegelungsstellung der Lenkung und einer ersten Arbeitslage des Schalters führt, wobei auch eine Weiterdrehung der Handhabe möglich ist,
- Fig. 4a, 4b: eine dritte Betriebsphase, die sich bei einer Rückdrehung der Handhabe bis zur Ruhelage des Schalters ergibt, wobei aber die Entriegelungsstellung der Lenkung noch erhalten bleibt,
- Fig. 5a, 5b: die sich danach ergebende vierte Betriebsphase bei der gleichen Ruhelage des Schalters wie in der Betriebsphase von Fig. 4a, doch sind bereits die Voraussetzungen dafür gegeben, dass sich wieder die Ausgangsposition wie im Ruhefall von Fig. 1a einstellt, und
- Fig. 6a,6b: eine Alternative zu dem vierten Betriebsfall von Fig. 5a, wo die Voraussetzungen für eine Rückstellung in die Ausgangsposition von Fig. 1a auf andere Weise geschaffen wurden.

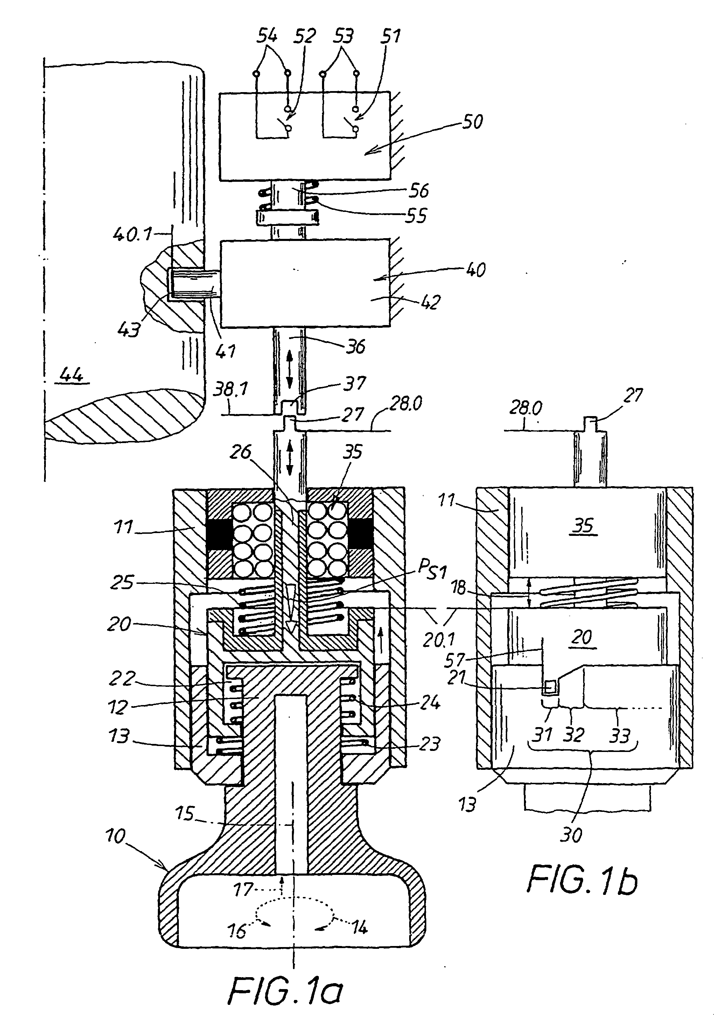

Wie bereits erwähnt wurde, sind in den Zeichnungen nur die wesentlichsten Bauteile der Erfindung schematisch dargestellt. Die Vorrichtung umfasst eine Handhabe 10 in einem Gehäuse 11, die mit einem Rotor 20 über zwei ineinandergreifende Verbindungsteile 12, 22 zwar drehfest, aber gegeneinander axialbeweglich verbunden sind. Zur Drehlagerung des Rotors 20 dient ein hülsenartiger Stator 13, der eine ortsfeste Position im Gehäuse 11, einnimmt. Die Verbindung besteht aus einem Schaft 12 mit unrundem Profil an der Handhabe 10, welcher in eine Aufnahme 22 des Rotors eingreift, die eine entsprechende Unrundheit aufweist. Verschiedene Druckfedern 23, 24, 25 zwischen axialen Schultern des Stators 13 und des Rotors 20 bzw. Stator 13 und Handhabe 10 bzw. des Rotors 20 und des Gehäuses 11 wirken summativ auf den Rotor 20 ein, um ihn in der aus Fig. 1a und 1b ersichtlichen axialen Ausgangsposition zu halten. Diese Ausgangsposition ist mit einer Hilfslinie markiert und mit 20.1 bezeichnet.

Wie aus Fig. 1b zu entnehmen ist, trägt der Stator 13 eine Steuerkurve 30 die sich in drei zueinander unterschiedliche Abschnitte 31 bis 33 gliedern lässt. Mit dieser Steuerkurve 30 wirkt der Rotor 20 zusammen. Dies geschieht im vorliegenden Fall durch einen die Umfangsfläche des Rotors 20 überragenden radialen Zapfen 31. Im Ruhefall gemäß Fig. 1a, 1b der Vorrichtung greift der Zapfen 21 formschlüssig in ein Anfangsstück 31 der Steuerkurve 30 ein, welches hier aus einem axialen Schlitz im hülsenartigen Stator 13 ausgebildet ist. Die erwähnte Ausgangsposition 20.1 des Rotors 20 ist, wie Fig. 1b verdeutlicht, durch axiale Endanschläge zwischen dem Zapfen 21 und dem axialen Nutende des Anfangsstücks 31 der Steuerkurve 30 bestimmt. Die erwähnten Druckfedern 23 bis 25 lassen summativ eine durch den Kraftpfeil P_{S1} gekennzeichnete Rückstellkraft am Rotor 20 entstehen.

Durch den formschlüssigen Eingriff bei 21, 31 ist auch eine durch den Pfeil 16 verdeutlichte Rückdrehung der Handhabe 10 nicht möglich. Außerdem sorgen axiale Schultern zwischen dem Stator 13 und der Handhabe 10 dafür, dass bei der Erfindung eine axiale Eindrückbewegung 17 grundsätzlich ausgeschlossen ist. Der Rotor 20 ist mit einem axialen Schaft 26 versehen, dessen Schaftende einen kuppelfähigen Ausgang 27 des Rotors 20 bestimmt. Es gibt nämlich, in Ausrichtung mit der Achse 15 der Vorrichtung, einen Gegenschaft 36, der eine zum Rotorausgang 27 komplementäre Gegenkupplung 37 besitzt. In der erwähnten Ausgangsposition 20.1 des Rotors ist die Kupplung 27, 37 außer Eingriff.

Der Gegenschaft 36 steht in Drehverbindung einerseits mit einem Aktuator 42, einer Lenkungsverriegelung 40 und andererseits mit einer Schaltwelle 56 eines Zündanlasschalters 50. Beide Bauteile 40, 50 können von konventioneller Bauweise sein, weshalb es genügt, deren inneren Aufbau durch die damit erzielbaren bekannten Wirkungen zu beschreiben. Der Aktuator 42 der Lenkungsverriegelung 40 steuert ein Sperrglied, welches im vorliegenden Fall aus einem längsbeweglichen Sperrbolzen 41 besteht. Der Sperrbolzen 41 befindet sich in dem Ruhefall von Fig. 1a in der Verriegelungsstellung, welche durch die Hilfslinie 40.1 gekennzeichnet ist. In dieser Verriegelungsstellung 40.1 greift der Sperrbolzen 41 in eine drehfest mit einer Lenksäule 44 verbundenen Sperröffnung 43 ein. Dadurch ist ein Lenken des Fahrzeugs nicht möglich.

Im vorliegenden Fall ist der Gegenschaft 36 durch den Aktuator 42 der Lenkungsverriegelung 40 hindurch stets drehfest mit der Schallwelle 56. Die Schaltwelle 56 sorgt dafür, dass bei bestimmten Drehlagen bewegliche Kontakte von hier nur beispielhaft und schematisch angedeuteten Teilschaltern 51, 52 betätigt werden. Zweckmäßigerweise sind Drehfedern vorgesehen, welche bei entkuppeltem Gegenschaft 36 für eine Ausgangsdrehlage der Schaltwelle 56 sorgen, so dass die beiden schematisch angedeuteten Teilschalter 51, 52 sich in Offenstellung befinden. Der Gegenschaft 36 und die Schaltwelle 56 können unter der Wirkung einer axialen Rückstellkraft stehen, die von einer Druckfeder 55 ausgeht. Durch nicht näher gezeigte Endanschläge wird daher der Gegenschaft 36 im Ruhefall in der durch eine Hilfslinie verdeutlichten Axialposition 38.1 gehalten. Die erwähnte Ausgangsposition 20.1 des Rotors 20 bestimmt dabei die durch die entsprechende Hilfslinie 28.0 in Fig. 1a verdeutlichte entkupplungswirksame Axialstellung des Rotorausgangs 27.

Wie bereits eingangs erwähnt wurde, kann die erfindungsgemäße Vorrichtung über einen nicht näher gezeigten ID-Geber betätigt werden. Dieser ID-Geber besteht z.B. aus einer Scheckkarte mit darauf gespeicherten Daten, welche die zur Steuerung des Fahrzeugs berechtigte Person bei sich trägt. Das Fahrzeug seinerseits beinhaltet einen ID-Nehmer, welcher bei Annäherung der Scheckkarte an das Fahrzeug mit dieser kommunizieren kann. Diese Kommunikation beginnt zweckmäßigerweise erst durch eine bewusst zu startende ID-Abfrage. Diese ID-Abfrage wird durch eine bestimmte Handlung der berechtigten Person eingeleitet. Eine Möglichkeit dazu besteht in der Betätigung eines elektrischen Schalters. Dieser die ID-Abfrage auslösende Schalter kann in den zur Betätigung einer Tür dienenden Griff integriert sein. Diese Handlung ist dann in die normalerweise ablaufende Betätigung beim Einsteigen in das Fahrzeug oder im Fahrzeug eingebunden.

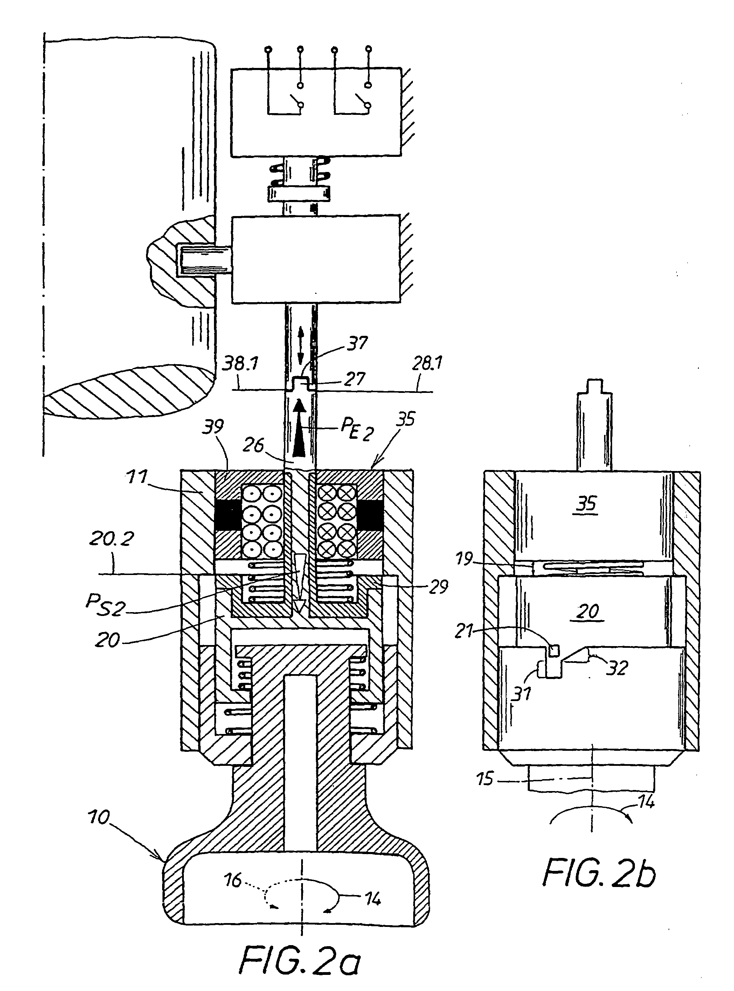

Die ID-Abfrage kann zu einem zweifachen Ergebnis führen. Liegt ein falscher ID-Geber vor, so mißlingt die Kommunikation mit dem ID-Nehmer im Fahrzeug und es bleibt bei der Blockade der Handhabe 10 gemäß Fig. 1a. Wenn aber aufgrund des richtigen ID-Gebers die Kommunikation erfolgreich ist, wird ein Elektromagnet 35 bestromt, wie Fig. 2a zeigt.

Der Elektromagnet 35 sitzt am inneren Ende des Gehäuses 11 und ist in einem aus Fig. 1b ersichtlichen definierten Axialabstand 18 vom Rotor 20 entfernt angeordnet. Der Elektromagnet 35 ist schematisch durch Windungen seiner elektrischen Spule verdeutlicht, die im Ruhefall von Fig. 1a nicht bestromt werden. Wenn aber die Bestromung gemäß Fig. 2a des Elektromagneten 35 stattfindet, dann entsteht eine durch den Kraftpfeil P_{E2} gekennzeichnete Magnetkraft, die auf den Rotor 20 wirkt. Dies ergibt sich, weil, ausweislich der Fig. 2a der Elektromagnet 35 eine Umhüllung aus magnetisch leitendem Material 39 besitzt, die im Rotor 20 durch Bereiche 29 aus magnetisierbarem Material vervollständigt wird. Diese Bereiche 29 bestehen aus einer abschnittweisen Umkleidung des erwähnten Rotorschafts 26 und aus einer das innere Endstück des Rotors 20 überdeckenden Scheibe, die hier axial profiliert ist. Diese Magnetkraft P_{E2} wirkt der erwähnten Rückstellkraft der Federn 23 bis 25 entgegen. Diese Kräfte sind so zueinander abgestimmt, dass aufgrund der Bestromung von Fig. 2a der Rotor 20 in seine versetzte, durch die Hilfslinie 20.2 in Fig. 2a verdeutlichte axiale Position gelangt, die aus noch näher ersichtlichen Gründen als "Zwischenposition" bezeichnet werden soll. In dieser Zwischenposition 20.2 ist also eine in Fig. 2a eingezeichnete summative Feder-Rückstellkraft P_{S2} mit der Magnetkraft P_{E2} in einem Gleichgewicht und es bleibt zwischen dem Rotor 20 und dem Elektromagneten 35 ein verminderter Axialabstand 19 gemäß Fig. 2b bestehen.

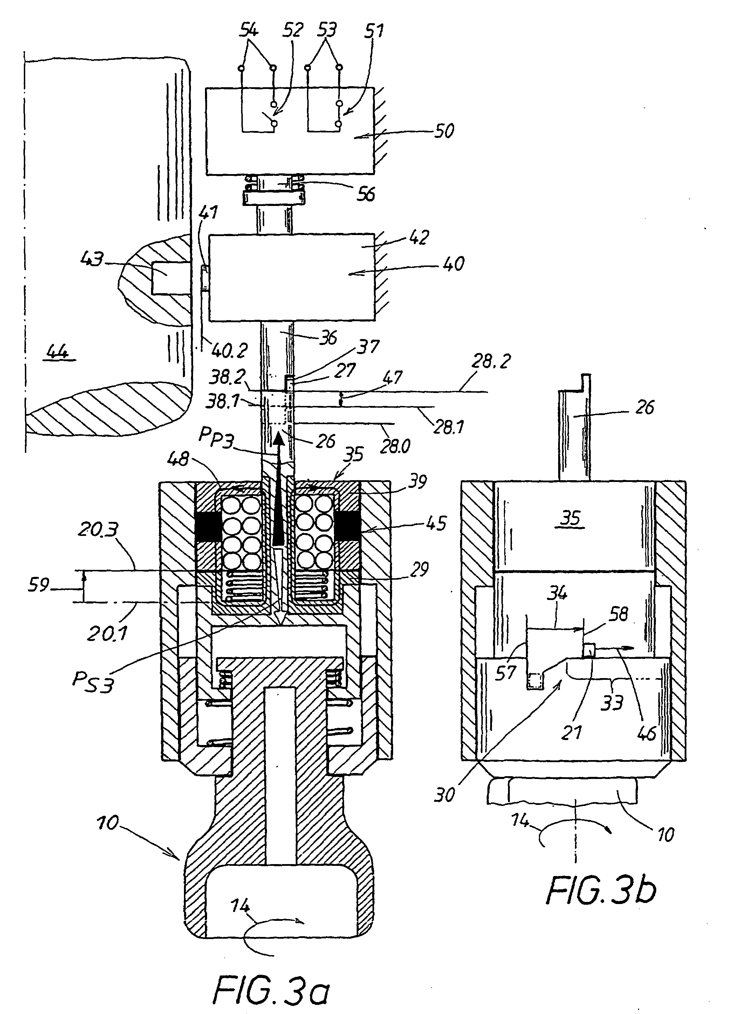

In der Zwischenposition 20.2 ist der Rotor 20 mit seinem Zapfen 21 aus dem nutartigen Anfangsstück 31 der Steuerkurve 30 herausgetreten und in Ausrichtung mit dem nächsten Kurvenabschnitt 32 gekommen, nämlich einem bezüglich der Rotorachse 15 geneigt verlaufenden Zwischenstück 32. Der Zapfen 21 ist zwar aus der Nut herausgetreten, stützt sich aber noch an der dem geneigten Zwischenstück 32 gegenüberliegenden linken Flanke ab. Dadurch ist nur eine Drehung im Sinne des Drehpfeils 14 der Handhabe 10 möglich. Eine Rückdrehung im Sinne des Gegendrehpfeils 16 ist aber immer noch verhindert. Durch die Drehung 14 wird über die Führung von 21 auf 32 der Rotor 20 nicht nur verdreht, sondern auch axial in die aus Fig. 3a und 3b ersichtliche Endposition 20.3 verschoben.

In der Zwischenposition 20.2 des Rotors 20 hat sich der Rotorausgang 27 um ein entsprechendes axiales Stück in seine mit 28.1 gekennzeichnete mittlere Axialstellung bewegt, welche mit der vorbeschriebenen Axialposition 38.1 der Gegenkupplung 37 zusammenfällt. Dadurch liegt eine drehfeste Verbindung zwischen den beschriebenen Kupplungen 27, 37 vor. Die vorerwähnte mögliche Drehung 14 der Handhabe wirkt sich daher über den Rotor auch auf den Gegenschaft 36 und die Schaltwelle 36 aus. Die Fig. 3a und 3b zeigen einen Drehwinkel 34 der ausreicht, um über die Schaltwelle 36 den ersten Teilschalter 51 des Zündanlassschalters 50 wirksam zu setzen. Der Zapfen 21 des Rotors 20 hat sich von seiner durch die Hilfslinie 57 gekennzeichnete Ruhelage des Schalters 50 in die 'durch die weitere Hilfslinie 58 bestimmte erste Arbeitslage des Schalters 50 bewegt. Die zugehörigen Klemmen 53 des Teilschalters 51 sind verbunden und bewirken bestimmte, ihnen zugeordnete Funktionen im Fahrzeug. In dieser ersten Arbeitslage 58 können z.B. das Radio und die Lampen im Fahrzeug eingeschaltet werden. In diesem Fall ist der zweite Schalter 52 noch offen, der. für andere Funktionen im Fahrzeug bestimmt ist. Nach dieser Drehung 34 hat der Rotorzapfen 21 ein horizontales Endstück 33 der Kurve 30 erreicht, das auf konstanter axialer Höhe weiterläuft. Bei einer Weiterdrehung 14 der Handhabe bewegt sich daher der Rotorzapfen 21 in konstanter axialer Höhe im Sinne des Bewegungspfeils 46 von Fig. 3b weiter, weshalb nacheinander alle weiteren Arbeitslagen des Schalters 50 erreicht werden; z.B. die Zündung des Fahrzeugs und schließlich das Anlassen vom Motor des Fahrzeugs. Durch Drehfedern wird die Handhabe 10 aus der letztgenannten Arbeitslage "Anlassen des Motors" in die zweite Lage "Zündung" selbsttätig zurückbewegt, wenn man sie los lässt.

Die erwähnte Anfangsdrehung 34 des Rotors wirkt sich natürlich über den Gegenschaft 36 auch auf den Aktuator 42 der Lenkungsverriegelung 40 aus. Der Aktuator 42 sorgt dafür, dass der Sperrbolzen 41 in seine durch die Hilfslinie 40.2 gekennzeichnete Entriegelungsposition gelangt, wo die Sperröffnung 43 in der Lenksäule 44 freigegeben ist. Die Lenkung 44 ist jetzt wieder betätigbar. Das bleibt auch bei der erwähnten Weiterdrehung 46 des Rotors 20 bestehen.

In der Endposition 20.3 des Rotors 20 liegt natürlich immer noch ein Eingriff der Kupplungsmittel 27, 37 zwischen dem Schaft 26 und Gegenschaft 36 vor. Der Axialhub 47 zwischen der Ausgangsposition 20.1 und der Endposition 20.3 des Rotors 20 wirkt sich natürlich in einem entsprechenden Axialhub 47 zwischen der ursprünglichen Axialstellung 28.0 des Rotorsausgangs 27 von Fig. 1a und der Axialstellung 28.2 von Fig. 3a aus, welche wieder höhengleich mit der entsprechend weit verschobenen Axialposition 38.2 der Gegenkupplung 37 ist. Nach der Anfangsdrehung 34 von Fig. 3a, 3b kann .die Bestromung des Elektromagneten wieder abgeschaltet werden, weil jetzt ein Permanentmagnet 45 wirksam geworden ist.

Der Permanentmagnet 45 ist in das erwähnte magnetisierbare Material 39 des Elektromagneten 35 integriert. Darüber hinaus steht in der Endposition 20.3 das magnetisierbare Material 29 im inneren Ende des Rotors 20 mit dem Material 39 des Elektromagneten 35 in Berührung. Dadurch entsteht ein in Fig: 3a eingezeichneter ringförmig geschlossener magnetischer Fluss 48 am Permanentmagneten 45, welcher den Rotor 20 mit einer sehr hohen magnetischen Kraft Pₚ₃ festhält. Die Abschaltung des Elektromagneten 35 kann durch Kontakte oder Sensoren erfolgen, die nach dieser Anfangsdrehung 34 wirksam werden. Alternativ könnte auch eine definierte Zeitspanne dafür verwendet werden, um den Elektromagneten 35 abzuschalten.

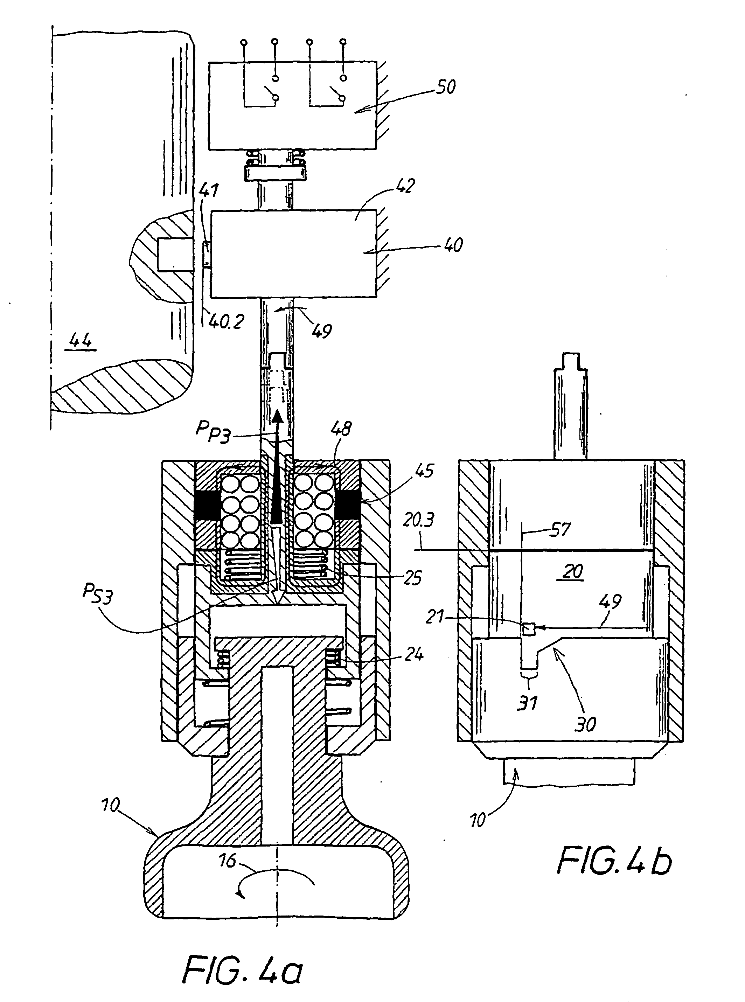

Die in der axialen Endposition 20.3 wirksame magnetische Kraft Pₚ₃ gemäß Fig. 3a ist wesentlich größer als die, durch die Rückstellfedern dabei anfallende, in Fig. 3 a ebenfalls eingezeichnete summative Rückstellfederkraft P_{S3}. Deshalb bleibt die Endposition 20.3 auch erhalten, wenn die Handhabe 10 im Sinne der Bewegungspfeile 16 von Fig. 4a zurückgedreht wird. In Fig. 4b ist die entsprechende Rückdrehung des Rotors 20 durch einen Bewegungspfeil 49 angedeutet. Der Rotor-Zapfen 21 ist wieder in axialer Ausrichtung mit dem Anfangsstück 31 der Steuerkurve 30 gebracht worden. Der Permanentmagnet 45 hält also den Rotor 20 unverändert in seiner Endposition 20.3 fest. Deswegen löst sich der Zapfen 21 bei der Rückdrehung 49 von der Steuerkurve 30 und der Schalter 50 gelangt wieder in durch die strichpunktierte Linie angedeutete Ruhelage 57 von Fig. 1a. Die Druckfedern 25, 24 bleiben entsprechend weit zusammengedrückt. Das gilt bei Fig. 4a nicht in analoger Weise für die Lenkungsverriegelung 40. Die Lenkungsverriegelung 40 bleibt vielmehr in der bereits aus der Fig. 3a ersichtlichen Entriegelungsstellung 40.2. Dafür sorgt der Aktuator 42, der bei dieser Rückdrehung 49 den Sperrbolzen 41 immer noch in seiner eingefahrenen Position festhält. In der Betriebsphase von Fig. 4a bleibt daher die Lenksäule 44 immer noch steuerbar. Die mit dem Anfangsstück 31 der Steuerkurve 30 ausgerichtete Ruhelage 57 des Zapfens 21 in Fig. 4b kann durch nicht näher gezeigte Endanschläge bestimmt sein, welche eine weitergehendere Rückdrehung der Handhabe verhindern.

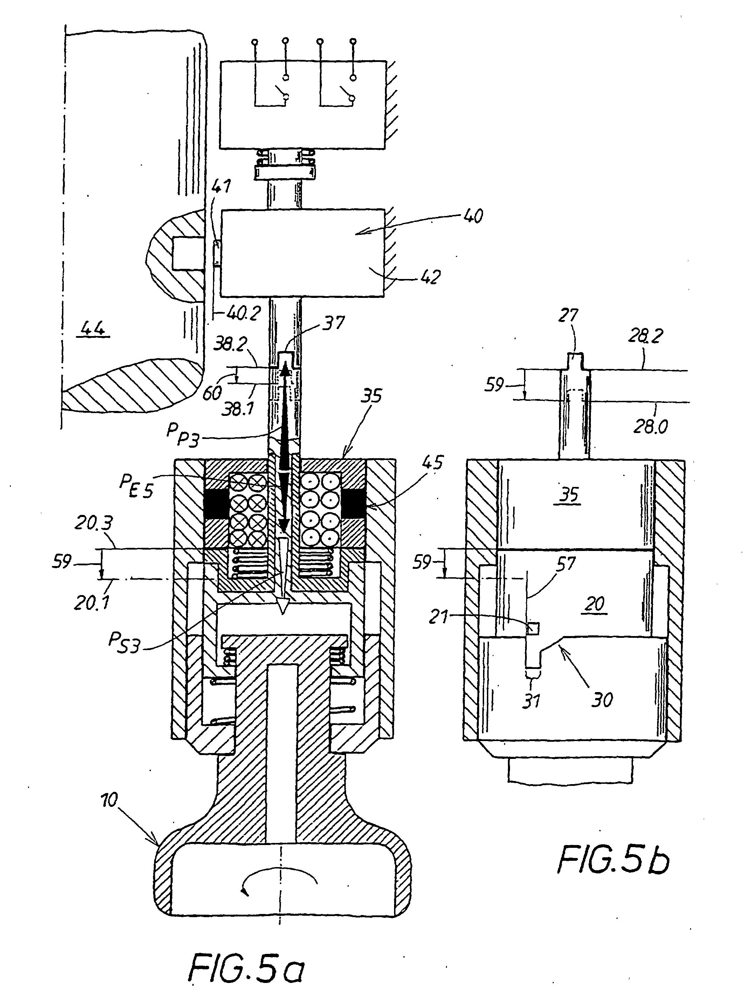

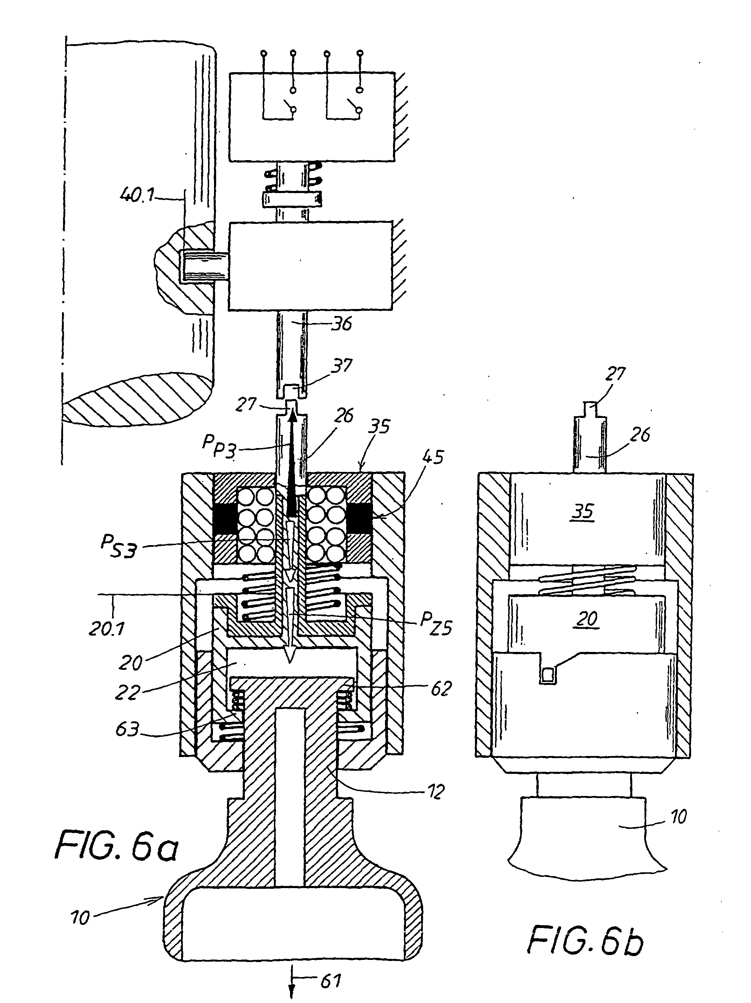

Um den Rotor 20 aus seiner Endposition 20.3 zu entfernen, muss eine Gegenkraft ausgeübt werden, welche die Differenz zwischen der magnetischen Kraft P_{P3} und der Federrückstellkraft P_{S3} übersteigt. Dazu schlägt die Erfindung zwei Wirkweisen vor, die alternativ benutzt werden können und in Fig. 5a, 5b einerseits und Fig. 6a, 6b andererseits erläutert sind. Dabei zeigt die Fig. 5a, 5b zum besseren Verständnis noch die gleiche Lage der Bauteile wie in Fig. 4a, 4b, weshalb insoweit die unmittelbar vorausgehende Beschreibung gilt. Es braucht lediglich auf die jetzt erfolgten zusätzlichen Maßnahmen eingegangen zu werden.

Diese zusätzlichen Maßnahmen bestehen in Fig. 5a und 5b darin, dass der Elektromagnet 35 im Vergleich mit Fig. 2a gegenbestromt wird. Wie durch die Symbole in den Windungen des Elektromagneten 35 von Fig. 5a verdeutlicht ist, fließt jetzt der Strom in Gegenrichtung zu Fig. 2a, weshalb der Elektromagnet 35 jetzt zwar betragmäßig die gleiche aber richtungsmäßig entgegengerichtete Magnetkraft P_{E5} erzeugt. Diese Gegenmagnetkraft P_{E5} wirkt also der magnetischen Kraft Pₚ₃ des Permanentmagneten 45 entgegen und in der gleichen Richtung wie die resultierende Federrückstellkraft P_{S3}. Die sich aus P_{E5} und P_{S3} ergebende Gesamtkraft reicht aus, um die Wirkung des Permanentmagneten 45 zu überwinden. Der Rotor 20 löst sich deshalb vom Permanentmagneten 45 und bewegt sich um die angedeutete axiale Strecke 59 aus seiner Endposition 20.3 wieder in seine Ausgangsposition 20.1 zurück. Dadurch fährt der axial ausgerichtete Zapfen 21 des Rotors 20 wieder in das nutenartige Anfangsstück 31 der Steuerkurve 30 ein.

Diese Axialbewegung wirkt sich natürlich auch zwischen der vorausgehenden Axialstellung 28.2 des Rotorausgangs 27 aus, der dann wieder in die ursprüngliche Axialstellung 28.0 von Fig. 1a gelangt ist. Diese Axialbewegung 59 vollzieht teilweise natürlich auch die Gegenkupplung 37, die sich von ihrer letzten eingefahrenen Axialposition 38.2 in die ursprüngliche Axialposition 38.1 von Fig. 1a zurückbewegt. Die sich daraus ergebende axiale Strecke 60 ist in Fig. 5a eingezeichnet. Diese Axialbewegung 60 registriert der Aktuator 42 der Lenkungsverriegelung 40 und bewegt den hier zunächst noch eingefahrenen Sperrbolzen 41 in seine Verriegelungsstellung 40.1 von Fig. 1a. Es kommt wieder zu der Verriegelung der Lenksäule 44. Damit sind die in Fig. 1a und 1b bezeichneten ersichtlichen ursprünglichen Lagen aller Bauteile erreicht, die den Ruhefall der Vorrichtung kennzeichnen.

Bei der Alternative von Fig. 6a, 6b wird die erforderliche Gegenkraft nicht auf elektrischem Wege sondern rein mechanisch erzeugt, nämlich durch eine mit dem Pfeil 61 gekennzeichnete Ziehbewegung der Handhabe 10. In Fig. 6a ist die Handhabe 10 noch in ihrer gezogenen Position gezeigt, wo der Rotor 20 bereits seine ursprüngliche axiale Ausgangsposition 20.1 erreicht hat und die beiden Kupplungsmittel 27, 37 bereits außer Eingriff gekommen sind und die in Fig. 1a ersichtliche Position einnehmen. Zur Verdeutlichung der Wirkungsweise sind aber die magnetische Kraft P_{P3} des Permanentmagneten 45 einerseits und die resultierende Federrückstellkraft P_{S3} andererseits in der Größe eingezeichnet, die vor Beginn der Ziehbewegung 61 der Handhabe 10 besteht und insoweit aus Fig. 5a bereits bekannt ist. Es kommt aber jetzt noch eine sehr hohe Zugkraft P_{Z5} hinzu, die durch die Handhabe 10 auf den Rotor 20 ausgeübt wird. Diese Zugkraft P_{Z5} kommt durch ein Kopfstück 62 am eingangs beschriebenen Schaft 12 der Handhabe und einen Innenbund 63 an der Aufnahme 22 vom Rotor 20 zustande. Zwischen diesen Elementen 62, 63 kann sich die eine erwähnte Druckfeder 24 abstützen. Dadurch lässt die Ziehbewegung 61 auf den Rotor 20 die Zugkraft P_{Z5} entstehen.

### Bezugszeichenliste :

- 10: Handhabe
- 11: Gehäuse
- 12: Verbindungsteil an 10, Schaft
- 13: Stator
- 14: Pfeil der Drehbewegung von 10
- 15: Achse von 10 bzw. 20
- 16: Pfeil der Rückdrehung von 10
- 17: axiale Eindrückbewegung von 10
- 18: Axialabstand zwischen 20.1 und 35 (Fig. 1b)
- 19: Axialabstand zwischen 20.2 und 35 (Fig. 2b)
- 20: Rotor
- 20.1: axiale Ausgangsposition von 20
- 20.2: axiale Zwischenposition von 20
- 20.3: axiale Endposition von 20
- 21: radialer Zapfen an 20
- 22: Verbindungsteil an 20, Aufnahme für 12
- 23: erste Druckfeder zwischen 20, 13
- 24: zweite Druckfeder zwischen 20, 10
- 25: dritte Druckfeder zwischen 20, 11
- 26: Rotorschaft von 20
- 27: Rotorausgang von 20, Kupplungsteil von 20
- 28.0: ursprüngliche Axialstellung von 27
- 28.1: mittlere Axialstellung von 27
- 28.2: extreme Axialstellung von 27
- 29: Bereich an 20 aus magnetisierbarem Material
- 30: Steuerkurve
- 31: erster Abschnitt von 30, Anfangsstück
- 32: zweiter Abschnitt von 30, geneigtes Zwischenstück
- 33: dritter Abschnitt von 30, radiales Endstück
- 34: Drehwinkel von 20 bzw. 36, Anfangsdrehung
- 35: Elektromagnet
- 36: Gegenschaft zu 26
- 37: Gegenkupplung an 36 für 37
- 38.1: ursprüngliche Axialposition von 37
- 38.2: axiale Arbeitsposition von 37
- 39: Umhüllung von 35 aus magnetisch leitfähigem Material
- 40: Lenkungsverriegelung
- 40.1: Verriegelungsstellung von 40
- 40.2: Entriegelungsstellung von 40
- 41: Sperrbolzen von 40
- 42: Aktuator für 41 von 40
- 43: Sperröffnung in 44
- 44: Lenksäule
- 45: Permanentmagnet
- 46: Bewegungspfeil der Weiterdrehung von 21 auf 33 (Fig. 3b)
- 47: Axialhub von 40
- 48: magnetischer Fluss von 45 durch 39, 29 (Fig. 4a)
- 49: Pfeil der Rückdrehung von 21 (Fig. 4b)
- 50: Zündanlassschalter
- 51: erster Teilschalter in 50
- 52: zweiter Teilschalter von 50
- 53: Klemme von 51
- 54: Klemme von 52
- 55: Druckfeder für 36 bzw. 56
- 56: Schaltwelle für 50
- 57: Hilfslinie für Ruhelage von 50 bzw. 20
- 58: Hilfslinie für erste Arbeitslage von 50 bzw. 20
- 59: axiale Hubstrecke zwischen 20.3 und 20.1 (Fig. 5a, 5b)
- 60: axiale Strecke zwischen 38.2 und 38.1 (Fig. 5a, 5b)
- 61: Ziehbewegung von 10 (Fig. 6)
- 62: Kopfstück an 12 (Fig. 6a)
- 63: Innenbund an 22 (Fig. 6a)

- P_{E2}: Magnetkraft von 35 (Fig. 2a)
- P_{E5}: Gegenmagnetkraft von 35 (Fig. 5a)

- P_{P3}: magnetische Kraft von 45 (Fig. 3 a)

- P_{S1}: Federrückstellkraft auf 20 bei 20.1
- P_{S2}: Federrückstellkraft von 20 bei 20.2
- P_{S3}: Federrückstellkraft von 20 bei 20.3

- P_{Z5}: Zugkraft von 10 (Fig. 6a)

## Patentansprüche

1. Vorrichtung mit einer Lenkungsverriegelung (40) und mit einem Zündanlassschalter (50),
wobei die Lenkung (40) aus einer Verriegelungs- in eine Entriegelungsstellung (40.1; 40.2) und der Schalter (50) aus einer Ruhelage (57) in mindestens einer Arbeitslage (58) mittels Drehung (14) einer unlösbaren Handhabe (10) nur dann umsteuerbar sind,
wenn ein im Fahrzeug angeordneter Identifikations-Nehmer die Anwesenheit eines ihm zugeordneten Identifikations-Gebers feststellt und eine Identifikations-Abfrage gestartet wird,
während bei fehlendem Identifikations-Geber eine manuelle Drehung (14; 16) der Handhabe (10) blockiert ist,
mit einer Rückstellfeder (23, 24, 25), welche auf mit der Handhabe (10) verbundene Steuermittel wirkt und, nach einer Betätigung, bestrebt ist, diese in eine definierte axiale Ausgangsposition zurückzuführen,
und mit einer Steuerkurve zur axial und rotativ abgestimmten Bewegung der Steuermittel,
**dadurch gekennzeichnet,**
**dass** die Steuermittel einen von der Rückstellfeder (23, 24, 25) beaufschlagten Rotor (20) umfassen, der Rotor (20) wenigstens bereichsweise aus magnetisierbarem Material (29) besteht und zwar drehfest aber axialbeweglich mit der Handhabe (10) verbunden ist,
**dass** der Rotorausgang (27) eine Drehverbindung mit der Lenkungsverriegelung (40) und mit dem Zündanlassschalter (50) aufweist,
**dass** der Rotor (20) in seiner Ausgangsposition (20.1) mit einem Anfangsstück (31) der Steuerkurve (30) zusammenwirkt und eine Drehung (14, 16) der Handhabe (10) zwar blockiert,
der Rotor (20) aber - nach erfolgreicher Identifikations-Abfrage - durch Bestromung eines Elektromagneten (35) gegen die Kraft (P_{S1}) der Rückstellfeder (23, 24, 25) in eine axiale Zwischenposition (20.2) verschoben wird, wo ein axial und radial geneigtes Zwischenstück (32) der Steuerkurve (30) gegenüber dem Rotor (20) wirksam wird,
**dass** durch Drehung (14) der Handhabe (10) der Rotor (20) von diesem Zwischenstück (32) in eine axiale Endposition (20.3) überführt wird, wo ein Permanentmagnet (45) den Rotor (20) gegen die Kraft (P_{S3}) der Rückstellfeder (23, 24, 25) in dieser Endposition (20.3) festhält,
**dass** ein Endstück (33) der Steuerkurve (30) eine Weiterdrehung (46) des Rotors (20) in der axialen Endposition (20.3) zulässt, wo über den Rotorausgang (27) die Entriegelungsstellung (40.2) der Lenkung (40) sowie die gewünschte Arbeitslage (58) des Schalters (50) bewirkt werden,
**dass** in der axialen Endposition (20.3) auch eine Rückdrehung (49) des Rotors (20) bis zur Ruhelage (57) des Schalters (50) möglich ist, wo sich der vom Permanentmagneten (45) festgehaltene Rotor (20) zwar von der Steuerkurve (30) löst, aber die' Entriegelungsstellung (40.2) der Lenkung (40) noch erhalten bleibt,
und **dass** - nach dieser Rückdrehung (49) - der Rotor (20) durch eine der Festhaltekraft (P_{P3}) des Permanentmagneten (45) entgegengerichtete axiale Gegenkraft (P_{S3}; P_{Z5}) in seine Ausgangsposition (20.1) an der Steuerkurve (30) axial zurückbewegt (59) wird, wo über den Rotorausgang (27) die Lenkung (40) wieder in ihre Verriegelungsstellung (40.1) gebracht wird.

2. Vorrichtung nach Anspruch 1, **dadurch gekennzeichnet, dass** in allen Positionen (20.1, 20.2, 20.3) die Handhabe (10) axial nicht eindrückbar (17) ist.

3. Vorrichtung nach Anspruch 1 oder 2, **dadurch gekennzeichnet, dass** in der Endposition (20.3) des Rotors (20) die Bestromung des Elektromagneten (35) abgeschaltet wird.

4. Vorrichtung nach einem der Ansprüche 1 bis 3, **dadurch gekennzeichnet, dass** das Abschalten des Elektromagneten (35) über einen Kontakt oder Sensor bewirkt wird, welcher die axiale Endposition (20.3) des Rotors (20) feststellt.

5. Vorrichtung nach einem der Ansprüche 1 bis 3, **dadurch gekennzeichnet, dass** das Abschalten des Elektromagneten (35) nach Ablauf einer definierten Zeitspanne bewirkt wird.

6. Vorrichtung nach einem der Ansprüche 1 bis 5, **dadurch gekennzeichnet, dass** die axiale Gegenkraft (P_{E5}) durch eine Gegenbestromung des Elektromagneten (35) bewirkt wird, welche in Richtung der Rückstellfederkraft (P_{S3}) wirkt.

7. Vorrichtung nach Anspruch 6, **dadurch gekennzeichnet, dass** die Gegenbestromung des Elektromagneten (35) durch eine Sicherung der am Fahrzeug befindlichen Türschlösser ausgelöst wird.

8. Vorrichtung nach Anspruch 6, **dadurch gekennzeichnet, dass** die Gegenbestromung des Elektromagneten (35) bei entferntem Identifikations-Geber durch Öffnen und/oder Schließen einer Tür bewirkt wird.

9. Vorrichtung nach Anspruch 6, **dadurch gekennzeichnet, dass** die Gegenbestromung des Elektromagneten (35) bei entferntem Identifikations-Geber nach Ablauf einer bestimmten Zeitspanne ausgelöst wird.

10. Vorrichtung nach einem der Ansprüche 1 bis 5, **dadurch gekennzeichnet, dass** die axiale Gegenkraft auf den Rotor (20) durch einen auf die Handhabe (10) ausgeübten Zug (61) hervorgehoben wird, welcher über Schultern (62) und Gegenschultern (63) in der Verbindung (12, 22) auf dem Rotor (20) übertragen wird.

11. Vorrichtung nach einem der Ansprüche 1 bis 10, **dadurch gekennzeichnet, dass** die ID-Abfrage durch am Fahrzeug vollziehbare weitere Betätigungen ausgelöst wird, wie Betätigen eines im Türgriff integrierten Schalters oder das Treten der Fahrzeugbremse oder das Betätigen der Handhabe (10).

12. Vorrichtung nach einem der Ansprüche 1 bis 11, **dadurch gekennzeichnet, dass** zwischen dem Rotorausgang (27) und der aus der Lenkungsverriegelung (40) und dem Zündanlassschalter (50) gebildeten Baugruppe eine Axialkupplung (27, 37) angeordnet ist
und die Axialkupplung (27, 37) in der Ausgangsposition (20.1) des Rotors (20) entkuppelt, aber sowohl in der axialen Zwischenposition (20.2) als auch in der axialen Endposition (20.3) des Rotors (20) in Eingriff ist.

## Claims

1. Device with a steering lock (40) and with an ignition starter switch (50),
with it being possible to change the steering (40) from a locked to an unlocked position (40.1; 40.2) and the switch (50) from an at-rest position (57) to at least one working position (58) by rotating (14) a non-detachable handle (10) only if
an identification receiver mounted in the vehicle detects the presence of an identification transmitter assigned to it and an identification interrogation is started
with a manual rotation (14; 16) of the handle (10) being blocked in the absence of an identification transmitter,
with a return spring (23, 24, 25) that acts on a control means connected to the handle (10) and after actuation attempts to return this to a defined axial starting position,
and with a control curve for an axially and rotationally harmonized movement of the control means,
**characterized in that**
the control means has a rotor (20) on which the return spring (23, 24, 25) acts, the rotor (20) consists at least in areas of magnetizable material (29) and is connected to the handle (10) in such a way that it cannot rotate but can be moved axially,
the rotor output (27) has a rotary connection with the steering lock (40) and with the ignition starter switch (50),
that the rotor (20) in its starting position (20.1) interacts with a starting piece (31) of the control curve (30) and blocks the rotation (14, 16) of the handle (10),
but the rotor (20), after a successful identification interrogation and energizing of an electromagnet (35) is moved against the force (P_{S1}) of the return spring (23, 24, 25) to an axial intermediate position (20.2), where an axial and radially inclined intermediate piece (32) of the control curve (30) acts against the rotor (20),
so that the rotation (14) of the handle (10) moves the rotor (20) from this intermediate piece (32) to an axial end position (20.3), where a permanent magnet (45) holds the rotor (20) in this end position (20.3) against the force (P_{S3}) of the return spring (23, 24, 25),
that an end piece (33) of the control curve (30) permits a further rotation (45) of the rotor (20) in the axial end position (20.3) where, by means of the rotor output (27), the unlocking position (40.2) of the steering (40) and the required working position (58) of the switch (50) is effected,
that in the axial end position (20.3) a reverse rotation (49) of the rotor (20) to the at-rest position (57) of the switch (50) is possible where the rotor (20) although held by the permanent magnets (45) is released from the control curve (30) but the unlocking position (40.2) of the steering (40) is still retained,
and that, after this reverse rotation (59), the rotor (20), by an axial opposing force (P_{S3}; P_{S5}) opposing the holding force (P_{P3}) of the permanent magnet (45) is moved back axially (59) to its starting position (20.1) at the control curve (30), where the steering (40) is again brought to its locked position (40. 1) by means of the rotor output (27).

2. Device in accordance with claims 1, **characterized in that** the handle (10) cannot be axially pushed in (17) in all positions (20.1, 20.2, 20.3).

3. Device in accordance with claim 1 or 2, **characterized in that** in the end position (20.3) of the rotor (20) the energization of the electromagnet (35) is switched off.

4. Device in accordance with one of claims 1 to 3, **characterized in that** the switching off of the electromagnet (35) is effected by means of a contact or sensor that determines the axial end position (20.3) of the rotor (20).

5. Device in accordance with one of claims 1 to 3, **characterized in that** the switching off of the electromagnet (35) takes place after a defined time period has elapsed.

6. Device in accordance with one of claims 1 to 5, **characterized in that** the axial opposing force (P_{E5}) is due to an opposing energization of the electromagnet (35) that acts in the direction of the force of the return spring (P_{S3}).

7. Device in accordance with claim 6, **characterized in that** the opposing energization of the electromagnet (35) is triggered by a safety device of the door lock mounted on the vehicle.

8. Device in accordance with claim 6, **characterized in that** the opposing energization of the electromagnet (35) is effected by a remote identification transmitter by opening and/or closing a door.

9. Device in accordance with claim 6, **characterized in that** the opposing energization of the electromagnet (35) with a remote identification transmitter is triggered after a defined time period has elapsed.

10. Device in accordance with one of claims 1 to 5, **characterized in that** the axial opposing force on the rotor (20) is applied by a pull (61) applied to the handle (10), that is transmitted via shoulders (62) and opposing shoulders (63) in the connection (12, 22) on the rotor (20).

11. Device in accordance with one of claims 1 to 10, **characterized in that** the identification interrogation is triggered by further actions that can be carried out on the vehicle, such as actuating a switch integrated into the door handle or by pressing the vehicle brake or operating the handle (10).

12. Device in accordance with one of claims 1 to 11, **characterized in that** an axial coupling (27, 37) is arranged between the rotor output (27) and the assembly consisting of the steering lock (40) and ignition starter switch (50)
and the axial coupling (27, 37) is decoupled in the starting position (20.1) of the rotor (20) but is engaged both in the axial intermediate position (20.2) and in the axial end position (20.3) of the rotor (20).

## Revendications

1. Dispositif comportant un verrouillage de direction (40) et avec un contacteur de démarrage (50),
la direction (40) pouvant être commutée, d'une position de verrouillage en une position de déverrouillage (40.1 ; 40.2), et le contacteur (50) pour être commuté d'une position de repos (57) en au moins une position de travail (58) par une rotation (14) d'une manette (10) indésolidarisable, uniquement lorsqu'
un récepteur d'identification, disposé dans le véhicule constate la présence d'un générateur d'identification lui étant associé et qu'une interrogation d'identification est lancée,
tandis que, en cas d'absence d'un générateur d'identification, toute rotation manuelle (14 ; 16) de la manette (10) est bloquée,
avec un ressort de rappel (23, 24, 25), qui agit sur des moyens de commande reliés à la manette (10) et qui, après un actionnement, vise à ramener celle-ci en une position initiale axiale définie,
et avec une came de commande, pour produire le déplacement axial et adapter en rotation des moyens de commande,
**caractérisé en ce que**
les moyens de commande comprennent un rotor (20) sollicité par le ressort de rappel (23, 24, 25), le rotor (20) étant formé au moins par zones d'un matériau (29) magnétisable et, précisément, étant relié de façon assujettie en rotation, cependant immobile axialement, à la manette (10),
**en ce que** la sortie de rotor (27) présente une liaison en rotation au verrouillage de direction (40) et au contacteur de démarrage (50),
**en ce que** le rotor (20), à sa position initiale (20.1), coopère avec un élément initial (31) de la came de commande (30) et bloque précisément toute rotation (14, 16) de la manette (10),
le rotor (20) cependant - une fois réussie une interrogation d'identification - par alimentation électrique d'un électro-aimant (35) est déplacé, à l'encontre de la force (P_{S1}) du ressort de rappel (23,24,25), pour passer en une position intermédiaire axiale (20.2), à laquelle une pièce intermédiaire (32), inclinée axialement et radialement, de la came de commande (30) est mise en action par rapport au rotor (20),
**en ce que**, par une rotation (14) de la manette (10), le rotor (20) est passé de cet élément intermédiaire (32) à une position finale (20.3), à laquelle un élément permanent (45) bloque le rotor (20) à cette position finale (20.3), à l'encontre de la force (P_{S3}) du ressort de rappel (23, 24, 25),
**en ce qu'**un élément d'extrémité (33) de la came de commande (30) permet une continuation de rotation (46) du rotor (20) à la position finale axiale (20.3), à laquelle, par une sortie de rotor (27), la position de déverrouillage (40.2) de la direction (40), ainsi que la position de travail (58) souhaitée de l'interrupteur (50), sont provoquées,
**en ce que**, à la position finale axiale (20.3) également, une rotation inverse (49) du rotor (20) est possible jusqu'à la position de repos (57) de l'interrupteur (50), où le rotor (20), bloqué par l'aimant permanent (45), se détache certes de la came de commande (30), mais la position de verrouillage (40.2) de la direction (40) subsistant encore,
et **en ce que** - après cette rotation inverse (49) - le rotor (20) est ramené axialement en (59) au moyen d'une force antagoniste axiale (P_{S3}, ; P_{Z5}) orientée à l'inverse de la force de blocage (P_{P3}) de l'élément permanent (45), pour passer à sa position initiale (20.1) sur la came de commande (30), à laquelle la direction (40) est de nouveau placée à sa position de verrouillage (40.1), par l'intermédiaire de la sortie de rotor (27).

2. Dispositif selon la revendication 1, **caractérisé en ce que**, à toutes les positions (20.1, 20.2, 20.3), la manette (10) ne peut être enfoncée axialement (17).

3. Dispositif selon la revendication 1 ou 2, **caractérisé en ce que** l'alimentation électrique de l'électroaimant (35) est coupée lorsque le rotor (20) est à la position finale (20.3).

4. Dispositif selon l'une des revendications 1 à 3, **caractérisé en ce que** la mise hors service de l'électroaimant (35) est provoquée par un contact ou un capteur, constatant que le rotor (20) se trouve à la position finale axiale (20.3).

5. Dispositif selon l'une des revendications 1 à 3, **caractérisé en ce que** l'électro-aimant (35) est mis hors service, après expiration d'un intervalle de temps défini.

6. Dispositif selon l'une des revendications 1 à 5, **caractérisé en ce que** la force antagoniste axiale (P_{E5}) est provoquée par une alimentation électrique à polarité inverse de l'électro-aimant (35) agissant en direction de la force de rappel (P_{S3}).

7. Dispositif selon la revendication 6, **caractérisé en ce que** l'alimentation électrique à polarité inverse de l'électro-aimant (35) est déclenchée par l'armement des serrures de portières se trouvant dans le véhicule.

8. Dispositif selon la revendication 6, **caractérisé en ce que** l'alimentation à polarité inverse de l'électroaimant (35) est provoquée par l'enlèvement du générateur d'identification, par ouverture et/ou fermeture d'une portière.

9. Dispositif selon la revendication 6, **caractérisé en ce que** l'alimentation à polarité inverse de l'électroaimant (35) est déclenchée lorsque le générateur d'identification est enlevé, après expiration d'un intervalle de temps déterminé.

10. Dispositif selon l'une des revendications 1 à 5, **caractérisé en ce que** la force antagoniste axiale sur le rotor (20) est provoquée par une traction (61) exercée sur la manette (10), traction transmise au rotor (20) par des épaulements (62) et des épaulements conjugués (63) dans la liaison (12, 22).

11. Dispositif selon l'une des revendications 1 à 10, **caractérisé en ce que** l'interrogation d'identification est déclenchée par d'autres actionnements pouvant être effectués sur le véhicule automobile, tel que l'actionnement d'un interrupteur intégré dans la poignée de portière, ou l'actionnement du frein de véhicule ou l'actionnement de la manette (10).

12. Dispositif selon l'une des revendications 1 à 11, **caractérisé en ce qu'**un accouplement axial (27, 37) est disposé entre la sortie de rotor (27) et le groupe, formé du verrouillage de direction (40) et du contacteur de démarrage (50)
et l'accouplement axial (27, 37) est désaccouplé lorsque le rotor (20) est à la position initiale (20.1), mais est engagé, lorsque le rotor (20) se trouve tant à la position intermédiaire axiale (20.2), qu'également à la position finale axiale (20.3).
